# NEUE EUROPÄISCHE PATENTSCHRIFT

(11) **EP 1 476 315 B2**
(45) Veröffentlichungstag und Bekanntmachung des Hinweises auf die Entscheidung über den Einspruch: **01.05.2019**
(45) Hinweis auf die Patenterteilung: 09.05.2012
(21) Anmeldenummer: 03706485.4
(22) Anmeldetag: 12.02.2003
(51) Int. Cl.: B42D 15/00

(54) **SICHERHEITSELEMENT UND SICHERHEITSDOKUMENT MIT EINEM SOLCHEN SICHERHEITSELEMENT**
SECURITY ELEMENT AND SECURITY DOCUMENT WITH ONE SUCH SECURITY ELEMENT
ELEMENT DE SECURITE ET DOCUMENT DE SECURITE POURVU D'UN TEL ELEMENT DE SECURITE

(30) Priorität: 14.02.2002 DE 10206357
(43) Veröffentlichungstag der Anmeldung: 17.11.2004
(73) Patentinhaber: Giesecke+Devrient Currency Technology GmbH, 81677 München (DE)
(72) Erfinder: Dr. HEIM, Manfred, 83646 Bad Tölz (DE)
(74) Vertreter: Höhfeld, Jochen
(86) Internationale Anmeldenummer: PCT/EP2003/001383
(87) Internationale Veröffentlichungsnummer: WO 2003/068525

(56) Entgegenhaltungen:
- EP-A- 0 756 945
- EP-A1- 0 608 078
- EP-A2- 0 341 002
- WO-A-01/53113
- WO-A-95/10419
- WO-A1-00/54985
- WO-A1-03/053713
- JP-A- 2001 315 472
- US-A- 4 705 300

## Beschreibung

Die Erfindung betrifft ein Sicherheitselement sowie ein Sicherheitsdokument, insbesondere Wertpapier wie beispielsweise eine Banknote, mit einem solchen Sicherheitselement. Die Erfindung betrifft gleichermaßen ein Halbzeug zur Herstellung eines solchen Sicherheitsdokuments. Insbesondere betrifft die Erfindung ein Sicherheitselement in Form eines Sicherheitsfadens zur Einlagerung in das Sicherheitsdokument als so genannter Fensterfaden und in Form eines Etiketts oder Transferelements zur Applikation auf das Sicherheitsdokument.

Sicherheitsdokumente im Sinne der vorliegenden Erfindung sind insbesondere Banknoten, aber auch Schecks, Scheckkarten, Kreditkarten, Ausweise, Pässe, Eintrittskarten, Fahrkarten und dergleichen. Als Halbzeug zur Her-stellung der vorgenannten Sicherheitsdokumente kommen beispielsweise unbedrucktes Sicherheitspapier und andere unbedruckte Sicherheitsdokumentsubstrate in Betracht.

Die vorgenannten Sicherheitsdokumente werden üblicherweise mittels eingelagerter Sicherheitsfäden oder aufgebrachter Sicherheitsetiketten oder -transferelernenten zum Schutz gegen Nachahmung und als Echtheitsnachweis ausgestattet. Sicherheitsfäden in Form von Fensterfäden sind beispielsweise im Zusammenhang mit Wertdokumenten; wie Banknoten, weithin bekannt, sind aber auch zur Verwendung in Scheckkarten und dergleichen grundsätzlich geeignet. Fensterfäden sind in das Grundmaterial des Sicherheitsdokuments eingelagert und erscheinen periodisch an der Sicherheitsdokumentoberfläche, so dass sie in diesen "Fensterbereichen" visuell erkennbar sind. In durchscheinenden Substraten ergibt sich ein so genannter Auflicht-/ Durchlichteffekt, wobei der Sicherheitsfaden im Durchlicht betrachtet gegenüber dem umgebenden Material als dunkler Streifen erscheint. Im Auflicht dagegen ist der Sicherheitsfaden nur in den Fensterbereichen erkennbar.

Man unterscheidet zwischen einfachen Fensterfäden, die nur an einer Oberfläche erscheinen und zweiseitigen Fensterfäden, die an beiden Oberflächen erscheinen, wobei ein Sonderfall des zweiseitigen Fensterfadens nachfolgend als Durchsichtsfensterfaden bezeichnet wird, der gleichzeitig von beiden Seiten des Wertdokuments aus sichtbar ist. Ein Durchsichtsfensterfaden überspannt sozusagen ein Loch oder einen durchsichtigen Bereich in dem Wertdokument. Ein weiterer zweiseitiger Fensterfaden ist der im Folgenden als alternierender Fensterfaden bezeichnete Sicherheitsfaden, der abwechselnd auf der Vorder- bzw. Rückseite eines Dokumentes sichtbar ist. Neben Sicherheitsfäden besteht auch die Möglichkeit, so genannte Transferelemente als Sicherheitselemente zu verwenden, wobei diese üblicherweise Aussparungen z.B. ein Loch, in einem Dokument überspannen.

Die Sicherheitselemente besitzen komplexe, visuell und/oder maschinell prüfbare Sicherheitsmerkmale, die nur mit großem Aufwand nachahmbar sind. Um den Fälschungsschutz zusätzlich zu erhöhen, besitzen solche Sicherheitselemente häufig mehrere unterschiedliche Sicherheitsmerkmale, die in ihrer Kombination auch einen neuen gemeinsamen Effekt besitzen können.

Ein in Sicherheitselementen häufig anzutreffendes Sicherheitsmerkmal ist eine mehrschichtige dichroitische Beschichtung, deren Farbeindruck sich je nach Betrachtungswinkel und/oder je nach Betrachtung im Durchlicht oder Auflicht ändert. Dieses Phänomen beruht auf Interferenzeffekten aufgrund der Überlagerung von Mehrfachreflexionen und/oder -transmissionen von Lichtwellen innerhalb des Schichtaufbaus in Kombination mit selektiven Absorptionseigenschaften der Schichtmaterialien. Die Farbänderung bei variierendem Betrachtungswinkel wird auch als Farbkippeffekt oder Color-Shift-Effekt bezeichnet. Die Farbänderung bei wechselnder Betrachtung im Auflicht und im Durchlicht wird demgegenüber nachfolgend als Farbwechseleffekt bezeichnet.

Optische Interferenzbeschichtungen mit Farbkippeffekt werden im Zusammenhang mit Sicherheitselementen beispielsweise beschrieben in EP 0 395 410 B1, EP 0 341002 B1, WO 01/03945 A1 und US 3,858,977. Je nach Art und Anzahl der Schichten im Schichtaufbau können 2, 3, 4 oder mehr vom Betrachtungswinkel abhängige unterschiedliche Farbwirkungen auftreten. Die Reflexions- und Transmissionseigenschaften solcher Farbkippeffekt schichten hängen von mehreren Faktoren ab, insbesondere von den Brechungsindizes, Absorptionskoeffizienten und Schichtdicken sowie der Schichtanzahl des Schichtaufbaues. Es ist gleichermaßen bekannt, die Inter-ferenzschichten vollflächig in ein Sicherheitselement zu integrieren oder aber, wie beispielsweise in WO 00/31571 A1 beschrieben, in winzige Flocken aufzubrechen und einer Druckfarbe unterzumischen.

Die WO 01/51 113 A1 offenbart ein Sicherheitselement mit einem lichtdurchlässigen Substrat, welches eine erste und eine zweite Oberfläche aufweist. Die erste Oberfläche umfasst eine optische Beugungsstruktur, beispielsweise ein Hologramm. Auf der zweiten Oberfläche ist eine Beschichtung aufgebracht, welche bei Betrachtung aus verschiedenen Blickwinkeln einen Farbkippeffekt erzeugt, beispielsweise mittels eines mehrschichtigen Interferenzelements.

Obwohl Sicherheitselemente mit dichroitischer Beschichtung bereits vorgeschlagen wurden, besteht nach wie vor Bedarf an demgegenüber verbesserten Sicherheitselementen.

Aufgabe der vorliegenden Erfindung ist es daher, Sicherheitselemente, insbesondere einen Sicherheitsfaden bzw. ein Transferelement, zur Verfügung zu stellen, die im Vergleich zum Stand der Technik eine erhöhte Fälschungssicherheit aufweisen.

Diese Aufgabe wird erfindungsgemäß durch ein Sicherheitselement sowie ein Sicherheitsdokument bzw. Halbzeug mit den Merkmalen der nebengeordneten Ansprüche gelöst. In davon abhängigen Ansprüchen sind vorteilhafte Weiterbildungen und Ausgestaltungen der Erfindung angegeben.

Demnach besitzt das mehrschichtige Sicherheitselement einen Interferenzschichtaufbau, der sowohl auf der Vorder- wie auf der Rückseite des Sicherheitselements jeweils einen Farbkippeffekt erzeugt, wenn das Sicherheitselement unter verschiedenen Winkeln betrachtet wird. Der Farbkippeffekt kann dabei auf der Vorder- und Rückseite des Sicherheitselements gleich aber auch unterschiedlich ausgestaltet sein.

Aufgrund des komplexen mehrschichtigen Aufbaus der Sicherheitselemente und der damit nur schwer nachzustellenden Farbkipp- und Farbwechseleffekte sind diese nur mit großem Aufwand nachahmbar

Der Interferenzschichtaufbau setzt sich dabei aus mindestens zwei mehrschichtigen Interferenzelementen (I₁, I₂) und mindestens einer Reflexionsschicht R zusammen.

Das Interferenzelement wird durch übereinander liegende Absorber- und Dielektrikumschichten gebildet, wobei auch mehrere Absorber- und Dielektrikumschichten abwechselnd übereinander angeordnet sein können. Anstelle von alternierenden Absorber- und Dielektrikumschichten können auch ausschließlich Dielektrikumschichten vorgesehen sein, wobei aneinander grenzende Schichten stark unterschiedliche Brechungsindices besitzen, damit ein Farbkippeffekt erzeugt wird. Die Verwendung der Absorberschichten ist jedoch vorteilhaft, weil die Farbkippeffekte besser sichtbar sind.

Grundsätzlich können die Interferenzelemente I₁, I₂ mehrschichtig aufgebaut sein, umfassen aber vorzugsweise mindestens zwei Schichten, nämlich jeweils eine außen liegende Absorberschicht A₁ bzw. A₂ und eine zwischen der jeweiligen Absorberschicht und der innen liegenden Reflexionsschicht R liegende Dielektrikumsschicht D₁ bzw. D₂. Als Absorberschichten A₁, A₂ dienen typischerweise Metallschichten aus Materialien wie Chrom, Eisen, Gold, Aluminium oder Titan in einer Dicke von vorzugsweise 4 nm bis 20 nm. Als Absorberschichtmaterialien können auch Verbindungen wie NickelChrom-Eisen oder seltenere Metalle wie Vanadium, Palladium oder Molybdän verwendet werden. Weitere geeignete Materialien sind beispielsweise in der WO 01/03945 A1 angegeben, z.B. Nickel, Cobalt, Wolfram, Niobium, Aluminium, Metallverbindungen, wie Metallfluoride, -oxide, -sulfide, - nitride, -carbide, -phosphide, -selenide, -silicide und Verbindungen davon, aber auch Kohlenstoff, Germanium, Cermet, Eisenoxid und dergleichen.

Die Absorberschichten A₁, A₂ der Interferenzelemente können im Interferenzschichtaufbau die gleichen oder unterschiedliche Dicken besitzen und/oder aus den gleichen oder unterschiedlichen Absorbermaterialien bestehen.

Für die Dielektrikumschicht D₁, D₂ kommen hauptsächlich transparente Materialien mit einem niedrigen Brechungsindex < 1,7 in Betracht wie beispielsweise SiO₂, MgF, SiOx mit 1 < x < 2 und Al₂O₃. Grundsätzlich kommen fast alle aufdampfbaren, durchsichtigen Verbindungen in Frage, insbesondere also auch höher brechende Beschichtungsmaterialien wie ZrO₂ ZnS, TiO₂ und Indiumzinnoxide (ITO). Weitere für die Dielektrikumschichten D₁, D₂ geeignete Materialien sind beispielsweise in der WO 01/03945 A1 angegeben. Die Schichtdicke der Dielektrikumschichten D₁, D₂ liegen im Bereich von 100 nm bis 1000 nm, bevorzugt 200 nm bis 500 nm.

Die Dielektrikumschichten der Interferenzelemente können im Interferenzschichtaufbau die gleichen oder unterschiedlichen Dicken besitzen und/oder aus gleichen oder unterschiedlichen Dielektrikummaterialien bestehen.

Vorzugsweise sind die Interferenzelemente im Interferenzschichtaufbau unterschiedlich ausgestaltet, so dass diese jeweils unterschiedliche Farbkippeffekte erzeugen.

Anstelle von Absorberschichten A₁, A₂ können auch Dielektrikumschichten eingesetzt werden, wobei der Brechungsindex n von aneinander grenzenden Dielektrikumschichten stark unterschiedlich sein muss, einerseits n < 1,7 und andererseits n > 1,7, um einen deutlichen Farbkippeffekt hervorzurufen. Da bei diesem Aufbau für einen deutlichen Farbkippeffekt mehrere Dielektrikumschichten notwendig sind und die Herstellung damit sehr aufwändig ist, wird der Einsatz von Absorberschichten bevorzugt.

Die Absorberschichten A1, A2 und Dielektrikumsschichten D1, D2 der Interferenzelemente I1, I2 sowie die Reflexionsschicht R werden vorzugsweise im Vakuumbedampfungsverfahren auf dem Substrat S erzeugt, welches einen Bestandteil des Sicherheitselements 1 bildet.

Unterschiedlichste Bedampfungsverfahren sind zur Erzeugung der Schichten geeignet. Eine methodische Gruppe bildet Physical Vapor Deposition (PVD) mit Schiffchenbedampfung, Bedampfung durch Widerstandsheizung, Bedampfung durch Induktionsheizung oder auch Elektronenstrahlbedampfung, Sputtern (DC oder AC) und Lichtbogenbedampfung. Andererseits kann die Bedampfung auch als Chemical Vapor Deposition (CVD) erfolgen wie z.B. Sputtern im reaktiven Plasma oder jede andere plasmaunterstützte Bedampfungsart. Es besteht grundsätzlich auch die Möglichkeit, Dielektrikumsschichten aufzudrucken.

Bei der Reflexionsschicht R handelt es sich vorzugsweise um eine Metallschicht, beispielsweise aus Aluminium, Silber, Nickel, Platin oder Palladium, vorzugsweise aus Silber oder Aluminium oder aus einem anderen stark spiegelnden Metall. Je besser die Reflexionseigenschaften der Reflexionsschicht R sind, desto auffälliger ist der Farbkippeffekt und desto brillanter ist die gegebenenfalls vorhandene beugungsoptische Wirkung der Reliefstruktur.

Je nach Dicke der Reflexionsschicht kann diese opak oder aber auch semitransparent ausgestaltet sein. Unter "Semitransparenz" ist hierbei Transluzenz zu verstehen, d.h. die Schicht weist eine Lichtdurchlässigkeit von unter 90%, vorzugsweise zwischen 80% und 20% auf.

Vorzugsweise besitzt das Sicherheitselement zwei durch eine Reflexionsschicht voneinander getrennte Interferenzelemente, die unter verschiedenen Betrachtungswinkeln jeweils einen Farbkippeffekt erzeugen. Bei semitransparenter Reflexionsschicht ist gegebenenfalls auch ein Farbwechseleffekt erkennbar. Umfasst das Sicherheitselement ein vorzugsweise transparentes Substrat, befinden sich bei dieser Variante die Interferenzelemente und die Reflexionsschicht R auf der selben Seite des Substrates. Werden die beiden Interferenzelemente auf unterschiedlichen Seiten des Subtrates gewünscht, sind zwei Reflexionsschichten einzusetzen. Das Sicherheitselement besteht dann aus der Schichtreihenfolge Interferenzelement (I₁)/Reflexionsschicht (R₁)/Substrat (S)/Reflexionsschicht (R₂)/Interferenzelement (I₂).

Der Aufbau der Interferenzelemente kann identisch oder unterschiedlich sein, so dass das Farbspiel je nach Betrachtungsseite des Sicherheitselements gleich oder unterschiedlich ist. Bevorzugt sind unterschiedliche Farbkippeffekte. Unterschiedliche Effekte ergeben sich zum Beispiel durch Variation der in den Interferenzelementen und Reflexionsschichten verwendeten Materialien und/oder durch Variation der Schichtdicken der die Interferenzelemente oder Reflexionsschicht aufbauenden Einzelschichten. Die Farbintensität des zu beobachtenden Farbkippeffekts ist aufgrund der jeweils hinter dem Interferenzelement angeordneten reflektierenden Metallschicht maximal, so dass dieses Sicherheitsmerkmal visuell einfach prüfbar ist.

Darüber hinaus kann das Sicherheitselement insbesondere Beugungsstrukturen besitzen, die sich mit der Reflexionsschicht zumindest teilweise überlagern. Auch für die optische Wirkung der Beugungsstrukturen wirkt die Reflexionsschicht effektverstärkend, so dass auch dieses Sicherheitsmerkmal visuell einfach prüfbar ist.

Als Beugungsstrukturen kommen Refraktionsmuster, Transmissions-, Volumen- oder Reflexionshologramme, aber auch Gitterstrukturen in Betracht, die vorzugsweise Bestandteil des die Interferenzelemente und die Reflexionsschicht tragenden Substrats sind, die aber auch in jede andere geeignete Schicht oder in eine zusätzliche Schicht eingebracht sein können. Bei der zusätzlichen Schicht kann es sich z.B. um eine Lackschicht handeln.

Vorzugsweise sind die Beugungsstrukturen in die Oberfläche eines das Sicherheitselement bildenden, transparenten Kunststoffsubstrats als Reflexionshologramm eingebracht, insbesondere eingeprägt, wobei die Reflexionsschicht den reflektierenden Hintergrund für das Reflexionshologramm bildet. Die beiden Interferenzelemente mit der dazwischen liegenden Reflexionsschicht können gemeinsam auf einer Seite des Kunststoffsubstrats vorliegen, entweder auf der Oberfläche, in die die Reliefstruktur eingeprägt ist, oder auf der gegenüberliegenden, glatten Seite des Substrats. Die Interferenzschichten können aber auch auf gegenüberliegenden Seiten des Substrats angeordnet sein, wobei dann eine Reflexionsschicht auf der Substratoberfläche mit Reliefstruktur und auf der gegenüberliegenden, flächen Oberfläche des Substrats vorliegen muss. Es ergeben sich somit mehrere Varianten, die unterschiedliche visuelle Effekte besitzen und daher je nach Einsatzzweck mehr oder weniger bevorzugt sein können.

Die optische Wirkung eines solchen Sicherheitselements wird von beiden Betrachtungsseiten wesentlich von der Farbwirkung der Interferenzelemente bestimmt. Falls zusätzlich Beugungsstrukturen eingesetzt werden, kann zumindest von einer Betrachtungsseite, bei geeignetem Schichtaufbau auch von beiden Betrachtungsseiten, das optische Erscheinungsbild wesentlich durch den optischen Effekt dieser Beugungsstrukturen bestimmt werden. In diesem Fall überlagern sich die Effekte beider Sicherheitsmerkmale.

Ein derartiges Sicherheitselement ist daher zur Verwendung als zweiseitiger Sicherheitsfaden besonders geeignet, da er von jeder Betrachtungsseite besonders charakteristische Sicherheitsmerkmale erkennen lässt, die visuell prüfbar sind. Ein solcher zweiseitiger Sicherheitsfaden kann entweder als alternierender Sicherheitsfaden eingesetzt werden, der an unterschiedlichen Stellen des Sicherheitsdokuments an den gegenüberliegenden Sicherheitsdokumentoberflächen zutage tritt oder zumindest sichtbar ist. Er kann aber auch als Durchsichtsfensterfaden eingesetzt werden, wo er in einem besonders dünnen oder transparenten Bereich des Dokuments von beiden Dokumentseiten aus visuell erkennbar ist oder wo er ein Loch in dem Dokument überspannt.

Ein solches Sicherheitselement eignet sich aber auch als Transferelement z.B. in Gestalt eines Etiketts oder Patches, welches auf einer Oberfläche des Sicherheitsdokuments über ein Loch appliziert wird. Von einer Seite des Dokuments aus betrachtet ergibt sich optisch der Eindruck eines Patches mit Farbkippeffekt. Von der anderen Seite aus betrachtet sieht man durch das Loch des Dokuments einen Ausschnitt des Patches mit einem anderen oder gegebenenfalls auch einem identischen Farbkippeffekt, wobei es vom konkreten Schichtaufbau des Sicherheitselements abhängt, ob ein gegebenenfalls vorhandenes Beugungsdesign von beiden Seiten oder nur von einer Seite aus erkennbar ist.

Als "Transferelement" im Sinne der Erfindung wird ein Sicherheitselement bezeichnet, das auf einer separaten Trägerschicht, beispielsweise einer Kunststofffolie, in der umgekehrten Reihenfolge, wie sie später auf dem Sicherheitspapier zu liegen kommt, vorbereitet wird und anschließend mittels einer Klebstoff- oder Lackschicht in den gewünschten Umrissformen auf das Sicherheitspapier übertragen wird. Die Form des Sicherheitselementes ist nicht beschränkt und es sind alle beliebigen Umrissformen denkbar bis hin zu filigranen Strukturen, wie Guillochen etc. möglich. Häufig werden die Sicherheitselemente auch in Form von Streifen ausgebildet, die parallel zur Kanten des Wertdokumentes verlaufen. Die Trägerschicht kann nach dem Übertrag von dem Schichtaufbau des Sicherheitselements abgezogen werden oder als Schutzschicht als fester Bestandteil des Sicherheitselements auf dem Schichtaufbau verbleiben.

Die einzelnen Transferelemente können auf der Trägerschicht als separate Einzelelemente in den zu übertragenden Umrissformen vorbereitet werden. Alternativ wird die Schichtfolge der Transferelemente in kontinuierlicher Form auf der Trägerschicht vorgesehen. Derartige Trägerschichten mit voneinander beabstandeten einzelnen Transferelementen oder einem kontinuierlich verlaufenden Schichtaufbau werden im Folgenden als "Transfermaterial" bezeichnet und die auf der Trägerschicht angeordnete Schichtfolge des Sicherheitselements als "Übertragungslage".

Im Falle der kontinuierlichen Übertragungslage wird das Transfermaterial anschließend über eine Klebstoffschicht mit dem Sicherheitspapier verbunden und die Klebstoffschicht über entsprechende Prägewerkzeuge aktiviert, so dass die Übertragungslage nur in den aktivierten Bereichen an dem Sicherheitspapier haftet. Alle übrigen Bereiche werden anschließend mit der Trägerschicht abgezogen. Alternativ kann auch die Kleberschicht in Form des zu übertragenden Sicherheitselements ausgeführt sein. Als Klebstoffe werden vorzugsweise Heißschmelzkleber verwendet. Es können jedoch auch beliebige andere Klebstoffe, wie Reaktionslacke, verwendet werden.

Das erfindungsgemäß aufgebaute Sicherheitselement lässt sich mit weiteren Sicherheitsmerkmalen kombinieren, insbesondere mit einer Negativ- oder Positivschrift durch lokales Entfernen der Reflexionsschicht und/oder des Interferenzelements. Bei einem mehrschichtig aufgebauten Interferenzelement kann dabei mindestens eine bis hin zu allen Schichten lokal entfernt sein. Bei einem beispielsweise aus mindestens einer Absorber- und mindestens einer Dielektrikumsschicht bestehenden Interferenzelement befinden sich die Aussparungen vorzugsweise in der Absorberschicht. Werden in ein Sicherheitselement zwei Interferenzelemente eingesetzt, können diese jeweils unterschiedlich ausgestaltet werden. Z.B. können in einem Interferenzelement durch Aussparungen in der Absorberschicht Zahlen, in dem anderen Interferenzelemente durch Aussparungen in der Absorberschicht Buchstaben eingearbeitet und auch sichtbar gemacht werden. Den gestalterischen Möglichkeiten sind hier keine Grenzen gesetzt. Bei der Schrift handelt es sich vorzugsweise um alphanumerische Zeichen, ist aber darauf nicht beschränkt. Im Sinne der Erfindung kann es sich um jedes darstellbare Muster, Zeichen oder Codierung handeln. Auf Grund der Aussparungen im Schichtaufbau ergibt sich so ein zusätzlicher Auflicht-/Durchlichteffekt. Aufgrund der zweifachen Interferenzbeschichtung ist dieser Effekt besonders ausgeprägt, denn im Auflicht sind die Muster, Zeichen oder Codierungen wesentlich stärker verborgen als bei nur einer einfachen Interferenzbeschichtung. Im Durchlicht dagegen sind die Aussparungen als helle Bereiche in einer dunklen Umgebung klar erkennbar.

Durch lokales Entfernen der Reflexionsschicht und gegebenfalls des Interferenzelements wird das Sicherheitselement nach Ausgestaltung des einzelnen Schichten partiell transparent bzw. semitransparent.

Diese Eigenschaften und jeweiligen Vorteile der einzelnen Varianten werden nachfolgend in Bezug auf die begleitenden Zeichnungen erläutert. Die in den Figuren gezeigten Proportionen entsprechen nicht unbedingt den in der Realität vorliegenden Verhältnissen und dienen vornehmlich zur Verbesserung der Anschaulichkeit. Darin zeigen:
- Figur 1: ein Sicherheitsdokument mit auf einer Oberfläche appliziertem Sicherheitselement über einem Loch des Sicherheitsdokuments und mit integriertem Sicherheitselement als Fensterfaden;
- Figur 2: einen Querschnitt durch das Sicherheitsdokument aus Figur 1 entlang der Linie II - II;
- Figur 3: einen Querschnitt durch das Sicherheitsdokument nach Figur 1 entlang der Linie III - III mit Durchsichtsfensterfaden;
- Figur 4: einen Querschnitt durch das Sicherheitsdokument nach Figur 1 entlang der Linie IV - IV mit zweiseitigem, alternierenden Fenstersicherheitsfaden;
- Figur 5: den Schichtaufbau eines Sicherheitselements gemäß einer ersten Ausführungsform;
- Figur 6: den Schichtaufbau eines Sicherheitselements gemäß einer zweiten Ausführungsform;
- Figur 7: den Schichtaufbau eines Sicherheitselements gemäß einer dritten Ausführungsform;
- Figur 8: den Schichtaufbau eines Sicherheitselements nach Figur 5 mit Aussparungen in der Reflexionsschicht;
- Figur 9: den Schichtaufbau eines Sicherheitselements gemäß einer vierten Ausführungsform.

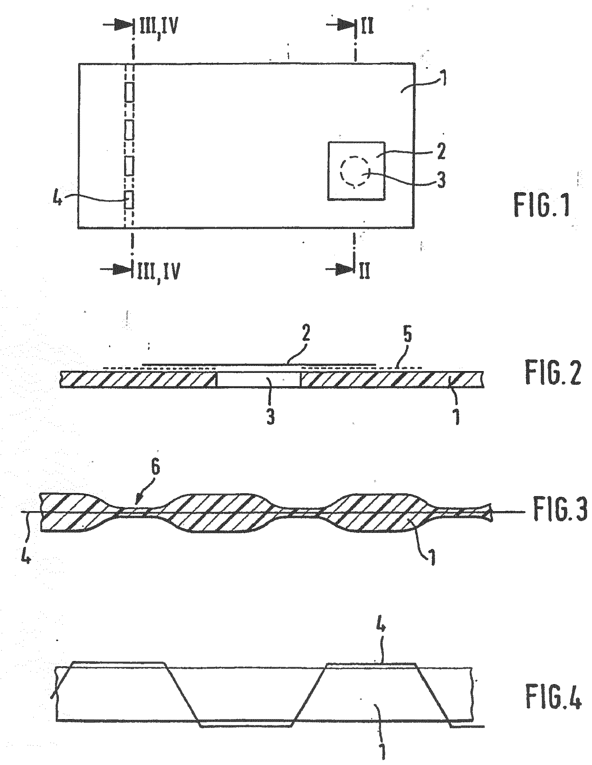

Figur 1 zeigt ein Sicherheitsdokument 1, beispielsweise eine Banknote aus Papier oder eine Ausweiskarte aus Kunststoff, welches mit zwei Sicherheitselementen 2, 4 ausgestattet ist. Bei dem ersten Sicherheitselement 2 handelt es sich um ein Patch, welches auf eine Oberfläche des Dokuments 1 als Etikett oder Transferelement über einem Loch oder einem sonstigen durchsichtigen Bereich 3 des Dokuments 1 appliziert ist, beispielsweise mittels eines Klebers. Bei dem zweiten Sicherheitselement 4 handelt es sich um einen zweiseitigen Fenstersicherheitsfaden, der in dem Dokument 1 entweder alternierend oder als Durchsichtsfensterfaden eingelagert ist.

In den Figuren 2 bis 4 sind die unterschiedlichen Arten der Applikation und Einlagerung der Sicherheitselemente 2 und 4 beispielhaft dargestellt. Figur 2 zeigt das Sicherheitsdokument 1 aus Figur 1 im Querschnitt entlang der Linie II - II durch das Patch. Der das Loch 3 umgebende Bereich des Dokuments 1 besitzt einen Aufdruck 5, der von dem Patch 2 abgedeckt wird. Das Loch kann z.B. bereits bei der Papierherstellung papiermacherisch hergestellt oder nachträglich in das Papier eingestanzt werden. Aufgrund der metallisch reflektierenden Schicht im Schichtaufbau des Sicherheitselements 2 ist dieser Aufdruck 5 unter dem Patch 2 verborgen. Eine vorteilhafte Ausgestaltung der Erfindung sieht daher vor, dass die Reflexionsschicht in diesem Bereich semitransparent ist oder sogar nicht vorhanden ist, so dass das Patch 2 transparent oder zumindest semitransparent ist, um den darunter verborgenen Aufdruck 5 zumindest unter bestimmten Betrachtungswinkeln erkennen zu können. Im Übrigen ist das Patch 2 im Bereich des Lochs 3 von beiden Seiten erkennbar.

Figur 3 zeigt den Fenstersicherheitsfaden aus Figur 1 als Durchsichtsfensterfaden. Dazu weist das Dokument 1, beispielsweise eine Banknote, Fensterbereiche 6 auf, die sehr dünn und im Extremfall als Loch ausgebildet sind, so dass der Sicherheitsfaden 4 von beiden Seiten des Dokuments 1 aus sichtbar ist. Die Durchsichtsfensterbereiche 6 haben somit für den Durchsichtsfensterfaden 4 dieselbe Funktion wie das Loch 3 für das Patch 2.

Figur 4 zeigt den Fenstersicherheitsfaden 4 als alternierend zweiseitigen Fenstersicherheitsfaden in einem Dokument 1, welches hier beispielsweise eine Ausweiskarte aus Kunststoff ist. Aus einer solchen Karte können beispielsweise Laschen ausgestanzt werden, die aus der Kartenebene herausbiegbar sind, um den Sicherheitsfaden 4 einfädeln zu können, und die sich dann aufgrund ihrer Eigenelastizität in die Kartenebene zurückbewegen, so dass der Faden 4 als alternierend beidseitiger Fensterfaden in der Karte integriert ist.

Verfahren zur Einlagerung eines zweiseitig alternierenden Fensterfadens, beispielsweise in Banknoten, sind dem Fachmann bekannt.

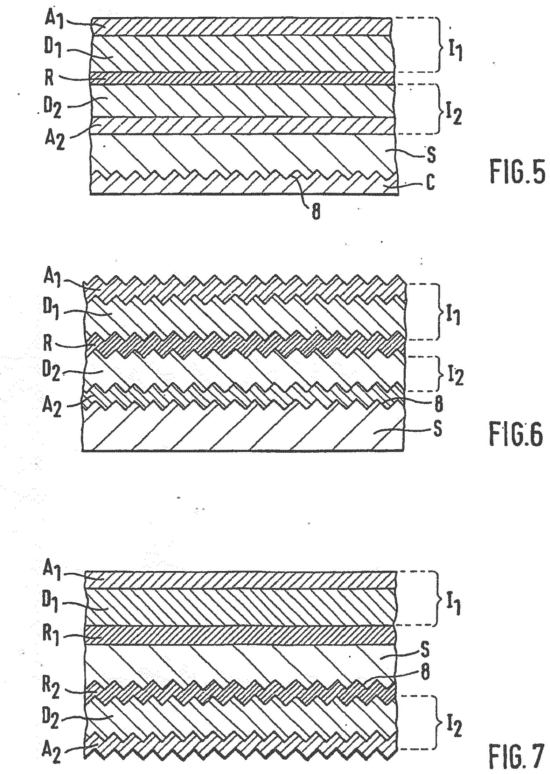

In den Figuren 5 bis 8 sind unterschiedliche Schichtaufbauten des erfindungsgemäßen Sicherheitselements 2 bzw. 4 ausschnittsweise im Querschnitt dargestellt.

Figur 5 zeigt einen Schichtaufbau, bei dem zwei Interferenzelemente I₁ und I₂ mit dazwischen liegender, metallischer, opaker Reflexionsschicht R auf einer Seite eines Substrats S übereinander liegend und aneinander angrenzend angeordnet sind. In die gegenüberliegende Substratoberfläche ist ein holographisches Reliefmuster 8 eingeprägt. Alternativ kann das Reliefmuster 8 auch in eine zusätzliche Lackschicht eingeprägt sein, wobei die Lackschicht auf einer der beiden Substratseiten vorliegen kann. Das gegen mechanische Belastung empfindliche Reliefmuster 8 ist durch eine optionale Schutzschicht C gegen Umwelteinflüsse abgeschirmt.

Die Interferenzelemente I₁ und I₂, jeweils bestehend aus einer Absorber-und einer Dielektrikumschicht, weisen einen dichroitischen Farbkippeffekt unter unterschiedlichen Betrachtungswinkeln auf, beispielsweise einen Wechsel zwischen grün und magentarot. Bei Verwendung gleicher Materialien und gleicher Schichtdicken für die jeweiligen Absorberschichten A₁ und A₂ sowie für die Dielektrikumschichten D₁ und D₂ weist das Sicherheitselement auf Vorder- und Rückseite den gleichen Farbkippeffekt auf.

Betrachtet man ein solches Sicherheitsdokument von dem oberen Interferenzelement I₁ aus, so ist aufgrund der metallischen Reflexionsschicht R ein brillanter Farbkippeffekt wahrnehmbar. Holographische Effekte treten auf der Betrachtungsseite nicht auf. Betrachtet man dasselbe Sicherheitselement von der gegenüberliegenden Seite, also von der Substratseite aus, so ist ein durch die Beugungsstruktur 8 erzeugter beugungsoptischer Effekt sowie der Farbkippeffekt wahrnehmbar. Insgesamt ergibt sich bei einem Schichtaufbau gemäß Figur 5 somit auf einer Betrachtungsseite ein Hologrammeffekt, kombiniert mit einem Farbkippeffekt, und auf der anderen Betrachtungsseite ein Farbkippeffekt ohne überlagerte Beugungseffekte.

In Figur 6 ist ein ähnlicher Schichtaufbau gemäß einer zweiten Ausführungsform der Erfindung dargestellt, der sich von dem in Bezug auf Figur 5 erläuterten Schichtaufbau dadurch unterscheidet, dass die Reliefstruktur 8 unmittelbar an das untere Interferenzelement I₂ angrenzt. Da die Interferenzelemente h, I₂ jeweils nur eine Schichtdicke von unter 1 µm aufweisen (die Figuren geben den Schichtaufbau lediglich schematisch wieder), weist die Reflexionsschicht R dasselbe Reliefmuster auf, wie die Reliefstruktur 8, auf der die Schichten aufgedampft sind. Dies hat zur Folge, dass die durch die Reliefstruktur 8 hervorgerufenen holographischen Effekte, anders als bei der Schichtstruktur nach Figur 5, von beiden Betrachtungsseiten aus erkennbar sind. Sind bei einem Schichtaufbau gemäß Figur 6 die Interferenzelemente I₁ und I₂ identisch aufgebaut, so lässt sich ein solches Sicherheitselement besonders gut als zweiseitiger Sicherheitsfaden verwenden, denn der beugungsoptische Effekt und der Farbkippeffekt sind auf beiden Seiten nahezu identisch. Beim Einlagern des Sicherheitsfadens braucht daher nicht auf Seitenrichtigkeit geachtet zu werden.

Figur 7 zeigt einen Schichtaufbau gemäß einer dritten Ausführungsform des erfindungsgemäßen Sicherheitselements, bei dem die Interferenzelemente I₁ und I₂ auf gegenüberliegenden Seiten des Substrats S angeordnet sind. Bei dieser Ausführungsform befinden sich zwei metallische Reflexionsschichten R₁ und R₂ auf jeweils einer Seite des Substrates, wobei die Reflexionsschicht R₂ sich auf der die Reliefstruktur aufweisenden Seite des Substrates befindet und die Reflexionsschicht R₁ sich auf der der Reliefstruktur 8 gegenüberliegenden, flachen Seite des Substrats S befindet. Dies hat zur Folge, dass der Hologrammeffekt wiederum nur einseitig erkennbar ist, ähnlich der Ausführungsform nach Figur 5. Betrachtet man das Sicherheitselement von der das Interferenzelement h aufweisenden Seite aus, ist kein beugungsoptischer Effekt erkennbar, von der das Interferenzelement I₂ aufweisenden Seite aus betrachtet allerdings schon. Da aber die Interferenzschicht I₂ bei dieser Ausführungsform vor der Reliefstruktur 8 liegt, ist ein Farbkippeffekt in diesem Falle von beiden Seiten des Sicherheitselements aus erkennbar. Die Interferenzelemente I₁, I₂ können unterschiedlich aufgebaut sein, um unterschiedliche Farbkippeffekte zu erzielen. Bei der Herstellung dieser Ausführungsform können die einzelnen Schichten auf die jeweilige Substratseite aufgedampft werden. Es können aber auch zunächst zwei Folien mit jeweils einer Reflexionsschicht und einem Interferenzelement bedampft werden. Im Anschluss daran werden diese bedampften Folien zusammenkaschiert, so dass die bedampften Seiten auf den Außenseiten zu liegen kommen.

In einer alternativen Ausführungsform könnten die Beugungsstrukturen auch in beide Oberflächen des Substrates gemäß Fig. 7 eingeprägt werden, so dass der beugungsoptische Effekt von beiden Betrachtungsseiten aus zu sehen ist. In diesem Fall besteht sogar die Möglichkeit, auf die beiden Substratseiten jeweils unterschiedliche Beugungsstrukturen einzuprägen, so dass je nach Betrachtungsseite unterschiedliche Beugungsmuster wahrgenommen werden können.

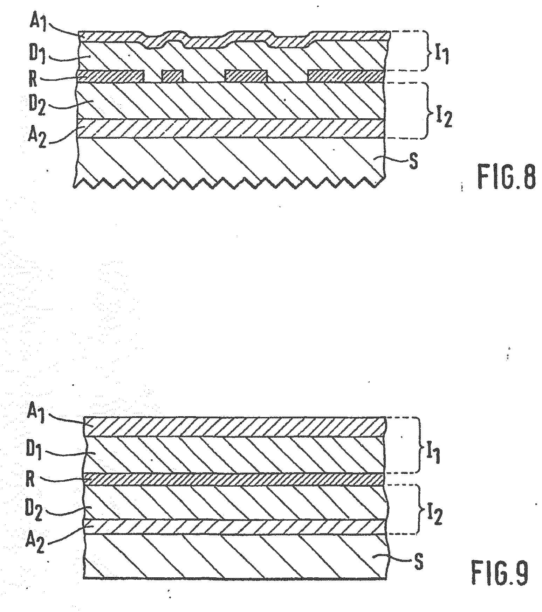

Figur 8 zeigt eine Ausgestaltung der Erfindung mit einem Schichtaufbau gemäß Fig. 5, in der die metallische Reflexionsschicht R Aussparungen 9 besitzt, so dass das Sicherheitselement im Bereich der Aussparungen 9 transparent oder zumindest semitransparent ist. Dadurch ergibt sich ein Auflicht-/ Durchlichteffekt. Wird ein solches Sicherheitselement beispielsweise als Sicherheitsfaden in eine Banknote eingelagert, so sind die Aussparungen 9, die die Form von Zeichen, Mustern oder Codierungen besitzen können, im Auflicht kaum wahrnehmbar. Bei Betrachtung im Durchlicht heben sie sich jedoch als helle Bereiche von dem ansonsten dunkel wirkenden Sicherheitsfaden ab. Bei der Betrachtung von der Substratseite S aus, sind folgende Effekte wahrnehmbar: Im Auf- und Durchlicht ist der Farbkippeffekt sichtbar. Zusätzlich sind im Durchlicht die Aussparungen zu erkennen. Die beugungsoptischen Effekte aufgrund der Beugungsstrukturen (8) sind im Auflicht bzw. im Durchlicht in den mit der Reflexionsschicht hinterlegten Bereichen sichtbar. In den Bereichen der Aussparungen treten die beugungsoptischen Effekte im Durchlicht deutlich bis ganz zurück. Von der dem Substrat gegenüberliegenden Seite aus betrachtet sind die beugungsoptischen Effekte nicht sichtbar. Im Auflicht und Durchlicht nimmt der Betrachter den Farbkippeffekt, im Durchlicht zusätzlich die Aussparungen wahr.

Im Allgemeinen und in allen beschriebenen Ausführungsformen ist das Substrat S vorzugsweise transparent, möglicherweise farbig transparent oder farbig transparent beschichtet. Das Substrat S ist vorzugsweise eine flexible Kunststofffolie, die nach dem Einprägen der Reliefstruktur 8 und nach der Beschichtung mit den Interferenzelemente I₁, I₂ und der dazwischen liegenden reflektierenden Metallschicht in Bänder, Fäden oder Etiketten zerschnitten wird. Das Substrat S kann auch auf einer Transferfolie vorliegen und im Transferverfahren, beispielsweise im Hot-Stamp-Verfahren, auf das Dokument übertragen werden. Zusätzlich zu den Schichtaufbauten gemäß Figuren 5 bis 8 können deshalb weitere Schutzschichten und insbesondere Klebeschichten und Abdeckschichten vorgesehen sein, damit das Sicherheitselement entweder als Etikett nach dem Entfernen der Abdeckschicht auf einen Gegenstand aufgeklebt oder als Transferelement im Transferverfahren übertragen werden kann.

Die Aussparungen der reflektierenden Metallschicht R können durch Laserablation erzeugt werden. Das Substrat S kann aber auch mit einer löslichen Farbe im Bereich der Aussparungen bedruckt werden, bevor die metallische Reflexionsschicht R aufgedampft wird, und in einem nachfolgenden Prozess kann die lösliche Farbe mit der darüber liegenden metallischen Reflexionsschicht R herausgelöst werden. Dem Fachmann sind zahlreiche weitere Verfahren zur Erzeugung der Aussparungen bekannt.

Das Herauslösen der Metallschicht R im Bereich der Aussparungen kann auch erst nach vollendeter Beschichtung des Substrats S erfolgen, so dass nicht nur die Reflexionsschicht R, sondern auch die angrenzenden Interferenzelemente I₁ und gegebenenfalls I₂ mit herausgelöst werden. Dadurch lässt sich erreichen, dass die Aussparungen im Durchlicht völlig farblos erscheinen.

Figur 9 zeigt eine Ausgestaltung der Erfindung mit einem Schichtaufbau gemäß Fig. 5, jedoch ohne Reliefmuster im Substrat und ohne Schutzschicht (C). Die metallische Reflexionsschicht R ist semitransparent ausgestaltet, so dass Sicherheitselement selbst semitransparent ist. Das bedeutet, dass der Betrachter auch bei dieser Ausführungsform auf beiden Seiten des Sicherheitselementes einen Farbkippeffekt, gegebenenfalls zusätzlich einen Farbwechseleffekt wahrnimmt. Sind die Interferenzelemente I₁ und I₂ unterschiedlich ausgestaltet, d.h. erzeugen diese unterschiedliche Farbkippeffekte bzw. Farbwechseleffekte, überlagern sich diese aufgrund der Semitransparenz der Reflexionsschicht R und es lassen sich so komplexe Erscheinungsformen des Sicherheitselementes generieren. Erzeugt das Interferenzelemente I₁ einen Farbkippeffekt von "magenta" nach "grün" und das Interferenzelement I₂ einen Farbkippeffekt von "grün" nach "gelb" und betrachtet man den Interferenzschichtaufbau von einer bestimmten Seite aus, sind beide Effekte von dieser Seite aus wahrnehmbar, überlagern sich aber zu einem Gesamteffekt, bei dem Mischfarben der Einzeleffekte auftreten können. Dabei wird je nach Ausgestaltung das dem Betrachter zugewandte Interferenzelement üblicherweise einen stärkeren Anteil am Gesamteffekt haben als das dem Betrachter abgewandte und durch die semitransparente Schicht abgeschwächte Interferenzelement.

## Patentansprüche

1. Sicherheitselement (2, 4) zur Einlagerung in oder Applikation auf einem Sicherheitsdokument (1), insbesondere für Wertpapiere, wie z. B. eine Banknote, wobei das Sicherheitselement im eingelagerten oder applizierten Zustand ein Substrat (S) mit mindestens einer Reflexionsschicht (R) sowie ein Interferenzelement (I1, I2) mit Farbkippeffekt aufweist, **dadurch gekennzeichnet, dass** das Sicherheitselement (2, 4) zu jeder Seite der Reflektionsschicht (R) ein Interferenzelement (I1, I2) mit Farbkippeffekt aufweist oder zu jeder Seite des Substrats (S) jeweils eine Reflexionsschicht (R1, R2) und jeweils ein Interferenzelement (I1, I2) mit Farbkippeffekt aufweist.

2. Sicherheitselement (2, 4) nach Anspruch 1, **dadurch gekennzeichnet, dass** das Sicherheitselement auf einer oder beiden Seiten beugungsoptische Effekte aufweist.

3. Sicherheitselement (2, 4) nach Anspruch 1 oder 2, **dadurch gekennzeichnet, dass** das Sicherheitselement zumindest in Teilbereichen Beugungsstrukturen (8) aufweist.

4. Sicherheitselement (2, 4) nach Anspruch 3, **dadurch gekennzeichnet, dass** sich die Beugungsstrukturen (8) mit der oder den Reflexionsschichten (R; R1, R2) zumindest teilweise überlagern.

5. Sicherheitselement (2, 4) nach wenigstens einem der Ansprüche 1 bis 4, **dadurch gekennzeichnet, dass** die mindestens eine Reflexionsschicht (R; R1, R2) eine Metallschicht ist.

6. Sicherheitselement (2, 4) nach wenigstens einem der Ansprüche 1 bis 5, wobei die mindestens eine Reflexionsschicht (R; R1, R2) opak oder semitransparent ist.

7. Sicherheitselement (2, 4) nach wenigstens einem der Ansprüche 1 bis 6, wobei die mindestens eine Reflexionsschicht (R; R1, R2) und/oder mindestens ein Interferenzelement (I1, I2) Aussparungen (9) in Form von Mustern, Zeichen oder Codierungen besitzt.

8. Sicherheitselement (2,4) nach wenigstens einem der Ansprüche 1 bis 7, wobei eines oder beide der Interferenzelemente (I1, I2) mindestens eine Absorberschicht (A1 bzw. A2) und mindestens eine Dielektrikumsschicht (D1 bzw. D2), die zwisehen der Reflexionsschicht (R) und der Absorberschicht (A1 bzw. A2) liegt, besitzen, und gegebenenfalls mindestens eine Absorberschicht und/oder mindestens eine Dielektrikumsschicht Aussparungen in Form von Mustern, Zeichen oder Codierungen aufweist.

9. Sicherheitselement (2, 4) nach wenigstens einem der Ansprüche 1 bis 8, wobei die Interferenzelemente (I1, I2) zweischichtig aufgebaut sind.

10. Sicherheitselement (2, 4) nach wenigstens einem der Ansprüche 1 bis 9, wobei die Interferenzelemente (I1, I2) unterschiedlich aufgebaut sind.

11. Sicherheitselement (2, 4) nach wenigstens einem der Ansprüche 1 bis 10, wobei die Interferenzelemente (I1, I2) und die dazwischen liegende Reflexionsschicht (R) auf einer Seite des Substrats (S) angeordnet sind.

12. Sicherheitselement (2, 4) nach wenigstens einem der Ansprüche 1 bis 10, wobei die Interferenzelemente (I1, I2) auf gegenüberliegenden Seiten des Substrats (S) angeordnet sind.

13. Sicherheitselement (2, 4) nach wenigstens einem der Ansprüche 3 bis 12, wobei die Beugungsstrukturen (8) in einer separaten Schicht vorliegen.

14. Sicherheitselement (2, 4) nach wenigstens einem der Ansprüche 3 bis 13, wobei die Beugungsstrukturen (8) in eine Oberfläche des Substrats (S) oder der separaten Schicht in Form eines Reliefmusters eingeprägt sind.

15. Sicherheitselement (2, 4) nach wenigstens einem der Ansprüche 3 bis 14, wobei eines der Interferenzelemente (I1, I2) an die Beugungsstrukturen (8) unmittelbar angrenzt.

16. Sicherheitselement (2, 4) nach wenigstens einem der Ansprüche 3 bis 15, wobei die bzw. eine Reflexionsschicht (R) unmittelbar an die Beugungsstrukturen (8) angrenzt.

17. Sicherheitselement (2, 4) nach einem der Ansprüche 1 bis 16 in Form eines Sicherheitsfadens zur Einlagerung in ein Sicherheitsdokument.

18. Sicherheitselement (2, 4) nach einem der Ansprüche 1 bis 16 als Etikett oder Patch zur Applikation auf ein Sicherheitsdokument.

19. Sicherheitselement (2, 4) nach einem der Ansprüche 1 bis 16 als Transferelement zur Applikation auf ein Sicherheitsdokument im Transferverfahren.

20. Sicherheitsdokument, insbesondere Wertpapier wie Banknote, oder Halbzeug zur Herstellung des Sicherheitsdokuments, mit einer ersten und einer zweiten, einander gegenüberliegenden Oberfläche und einem Sicherheitselement (2,4) nach einem der Ansprüche 1 bis 19, **dadurch gekennzeichnet, dass** das Sicherheitselement (2, 4) mit dem Dokument bzw. Halbzeug derart verbunden ist, dass es bei Betrachtung der beiden Oberflächen jeweils erkennbar ist und auf beiden Seiten einen Farbkippeffekt aufweist.

21. Sicherheitsdokument oder Halbzeug nach Anspruch 20, wobei das Sicherheitselement (2) auf einer der beiden Oberflächen appliziert ist und ein Loch (3) oder einen durchsichtigen Bereich des Dokuments bzw. Halbzeugs überspannt.

22. Sicherheitsdokument oder Halbzeug nach Anspruch 20, wobei das Sicherheitselement (4) zumindest teilweise in dem Dokument eingelagert ist und ein Loch oder einen durchsichtigen Bereich des Dokuments bzw. Halbzeugs überspannt.

23. Sicherheitsdokument oder Halbzeug nach Anspruch 20, wobei das Sicherheitselement (4) in dem Dokument bzw. Halbzeug derart eingelagert ist, dass es in ersten Bereichen an der ersten Oberfläche und in von den ersten Bereichen verschiedenen zweiten Bereichen an der zweiten Oberfläche visuell erkennbar ist.

24. Sicherheitselement (2, 4) nach einem der Ansprüche 1 bis 19 mit einem Transfermaterial zur Aufbringung des Sicherheitselements (2, 4) auf ein Wertdokument, **dadurch gekennzeichnet, dass** das Transfermaterial folgenden Schichtaufbau umfasst:
- das Substrat (S),
- und zu jeder Seite des Substrats (S) jeweils eine der Reflexionsschichten (R1, R2) und jeweils eines der Interferenzelemente (I1, I2) mit Farbkippeffekt.

25. Verfahren zur Herstellung eines Wertdokuments mit einem Sicherheitselement (2, 4) nach einem der Ansprüche 1 bis 19, **dadurch gekennzeichnet, dass** auf das Wertdokument bereichsweise das Sicherheitselement (2, 4) mit Transfermaterial nach Anspruch 24 übertragen wird und anschließend gegebenenfalls die Trägerschicht abgezogen wird.

## Claims

1. A security element (2, 4) for the embedding into or application onto a security document (1), in particular for papers of value, such as e.g. a bank note, wherein the security element in the embedded or applied state has a substrate (S) with at least one reflection layer (R) as well as an interference element (I1, I2) with color shift effect, **characterized in that** the security element (2, 4) has to each side of the reflection layer (R) an interference element (I1, I2) with color shift effect, or has to each side of the substrate (S) respectively one reflection layer (R1, R2) and respectively one interference element (I1, I2) with color shift effect.

2. The security element (2, 4) according to claim 1, **characterized in that** the security element has diffractive effects on one or both sides.

3. The security element (2, 4) according to claim 1 or 2, **characterized in that** the security element has at least in partial areas diffraction structures (8).

4. The security element (2, 4) according to claim 3, **characterized in that** the diffraction structures (8) overlap at least partly with the one or more reflection layers (R; R1, R2).

5. The security element (2, 4) according to at least one of claims 1 to 4, **characterized in that** the at least one reflection layer (R; R1, R2) is a metal layer.

6. The security element (2, 4) according to at least one of claims 1 to 5, wherein the at least one reflection layer (R; R1, R2) is opaque or semitransparent.

7. The security element (2, 4) according to at least one of claims 1 to 6, wherein the at least one reflection layer (R; R1, R2) and/or at least one interference element (I1, I2) have gaps (9) in the form of patterns, symbols or codings.

8. The security element (2, 4) according to at least one of claims 1 to 7, wherein one or both of the interference elements (I1, I2) have at least one absorber layer (A1 or A2) and at least one dielectric layer (D1 or D2) which is located between the reflection layer (R) and the absorber layer (A1 or A2), and optionally at least one absorber layer and/or at least one dielectric layer has gaps in the form of patterns, symbols or codings.

9. The security element (2, 4) according to at least one of claims 1 to 8, wherein the interference elements (I1, I2) have a two-layer structure.

10. The security element (2, 4) according to at least one of claims 1 to 9, wherein the interference elements (I1, I2) are structured differently.

11. The security element (2, 4) according to at least one of claims 1 to 10, wherein the interference elements (I1, I2) and the reflection layer (R) lying therebetween are disposed on one side of the substrate (S).

12. The security element (2, 4) according to at least one of claims 1 to 10, wherein the interference elements (I1, I2) are disposed on opposite sides of the substrate (S).

13. The security element (2, 4) according to at least one of claims 3 to 12, wherein the diffraction structures (8) are present in a separate layer.

14. The security element (2, 4) according to at least one of claims 3 to 13, wherein the diffraction structures (8) are embossed into a surface of the substrate (S) or of the separate layer in the form of a relief pattern.

15. The security element (2, 4) according to at least one of claims 3 to 14, wherein one of the interference elements (I1, I2) directly adjoins the diffraction structures (8).

16. The security element (2, 4) according to at least one of claims 3 to 15, wherein the or one reflection layer (R) directly adjoins the diffraction structures (8).

17. The security element (2, 4) according to any of claims 1 to 16 in the form of a security thread for the embedding into a security document.

18. The security element (2, 4) according to any of claims 1 to 16 as a label or patch for the application onto a security document.

19. The security element (2, 4) according to any of claims 1 or 16 as a transfer element for the application onto a security document by transfer method.

20. A security document, in particular paper of value such as bank note, or semifinished product for the production of the security document, with a first and a second surface located opposite each other and a security element (2, 4) according to any of claims 1 to 19, **characterized in that** the security element (2, 4) is connected to the document or semifinished product in such a way that, upon viewing the two surfaces, it is respectively recognizable and has a color shift effect on both sides.

21. The security document or semifinished product according to claim 20, wherein the security element (2) is applied onto one of the two surfaces and spans a hole (3) or a transparent area of the document or semifinished product.

22. The security document or semifinished product according to claim 20, wherein the security element (4) is at least partly embedded into the document and spans a hole or a transparent area of the document or semifinished product.

23. The security document or semifinished product according to claim 20, wherein the security element (4) is embedded into the document or semifinished product in such a way that it is visually recognizable in first areas on the first surface and in second areas, different from the first areas, on the second surface.

24. The security element (2, 4) according to any of claims 1 to 19 having a transfer material for the application of the security element (2, 4) onto a document of value, **characterized in that** the transfer material comprises the following layer structure:
- a carrier layer,
- the substrate (S),
- and to each side of the substrate (S) respectively one of the reflection layers (R1, R2) and respectively one of the interference elements (I1, I2) with color shift effect.

25. A method for producing a document of value having a security element (2, 4) according to any of claims 1 to 19, **characterized in that** onto the document of value the security element (2, 4) having transfer material according to claim 24 is transferred in certain areas and then optionally the carrier layer is pulled off.

## Revendications

1. Élément de sécurité (2, 4) destiné à être inséré dans ou appliqué sur un document de sécurité (1), en particulier pour papiers-valeurs tels que par exemple un billet de banque, cependant que l'élément de sécurité comporte, à l'état inséré ou appliqué, un substrat (S) ayant au moins une couche réfléchissante (R) ainsi qu'un élément d'interférence (I1, I2) à effet de changement des couleurs par basculement, **caractérisé en ce que** l'élément de sécurité (2, 4) comporte sur chaque face de la couche réfléchissante (R) un élément d'interférence (I1, I2) à effet de changement des couleurs par basculement ou sur chaque face du substrat (S) respectivement une couche réfléchissante (R1, R2) et respectivement un élément d'interférence (I1, I2) à effet de changement des couleurs par basculement.

2. Élément de sécurité (2, 4) selon la revendication 1, **caractérisé en ce que** l'élément de sécurité comporte sur une ou sur les deux faces des effets diffractifs.

3. Élément de sécurité (2, 4) selon la revendication 1 ou 2, **caractérisé en ce que** l'élément de sécurité comporte, au moins dans des zones partielles, des structures de diffraction (8).

4. Élément de sécurité (2, 4) selon la revendication 3, **caractérisé en ce que** les structures de diffraction (8) se superposent au moins partiellement avec la ou les couches réfléchissantes (R; R1, R2).

5. Élément de sécurité (2, 4) selon au moins une des revendications de 1 à 4, **caractérisé en ce que** la au moins une couche réfléchissante (R; R1, R2) est une couche métallique.

6. Élément de sécurité (2, 4) selon au moins une des revendications de 1 à 5, cependant que la au moins une couche réfléchissante (R; R1, R2) est une couche opaque ou semi-transparente.

7. Élément de sécurité (2, 4) selon au moins une des revendications de 1 à 6, cependant que la au moins une couche réfléchissante (R; R1, R2) et/ou le au moins un élément d'interférence (I1, I2) possède des évidements (9) sous forme de motifs, de caractères ou de codifications.

8. Élément de sécurité (2, 4) selon au moins une des revendications de 1 à 7, cependant qu'un ou les deux des éléments d'interférence (I1, I2) possèdent au moins une couche absorbante (A1 ou A2) et au moins une couche de diélectrique (D1 ou D2) située entre la couche réfléchissante (R) et la couche absorbante (A1 ou A2), et que, éventuellement, au moins une couche absorbante et/ou au moins une couche de diélectrique comporte des évidements sous forme de motifs, de caractères ou de codifications.

9. Élément de sécurité (2, 4) selon au moins une des revendications de 1 à 8, cependant que les éléments d'interférence (I1, I2) sont constitués de deux couches.

10. Élément de sécurité (2, 4) selon au moins une des revendications de 1 à 9, cependant que les éléments d'interférence (I1, I2) sont constitués différemment.

11. Élément de sécurité (2, 4) selon au moins une des revendications de 1 à 10, cependant que les éléments d'interférence (I1, I2) et la couche réfléchissante (R) située entre eux sont agencés sur une face du substrat (S).

12. Élément de sécurité (2, 4) selon au moins une des revendications de 1 à 10, cependant que les éléments d'interférence (I1, I2) sont agencés sur des faces opposées du substrat (S).

13. Élément de sécurité (2, 4) selon au moins une des revendications de 3 à 12, cependant que les structures de diffraction (8) se trouvent dans une couche distincte.

14. Élément de sécurité (2, 4) selon au moins une des revendications de 3 à 13, cependant que les structures de diffraction (8) sont gaufrées dans une surface du substrat (S) ou de la couche distincte sous forme d'un motif en relief.

15. Élément de sécurité (2, 4) selon au moins une des revendications de 3 à 14, cependant qu'un des éléments d'interférence (I1, I2) est directement adjacent aux structures de diffraction (8).

16. Élément de sécurité (2, 4) selon au moins une des revendications de 3 à 15, cependant que la ou une couche réfléchissante (R) est directement adjacente aux structures de diffraction (8).

17. Élément de sécurité (2, 4) selon une des revendications de 1 à 16 sous forme d'un fil de sécurité destiné à être inséré dans un document de sécurité.

18. Élément de sécurité (2, 4) selon une des revendications de 1 à 16 sous forme d'étiquette ou de patch destiné(e) à être appliqué(e) sur un document de sécurité.

19. Élément de sécurité (2, 4) selon une des revendications de 1 à 16 sous forme d'élément de transfert destiné à être appliqué sur un document de sécurité par procédé de transfert.

20. Document de sécurité, en particulier papier-valeur tel que billet de banque, ou semi-fini pour la fabrication du document de sécurité, ayant une première et une deuxième surface se faisant face et un élément de sécurité (2, 4) selon une des revendications de 1 à 19, **caractérisé en ce que** l'élément de sécurité (2, 4) est joint de telle manière au document ou au semi-fini qu'il est, lors d'une observation des deux surfaces, respectivement reconnaissable et présente des deux côtés un effet de changement des couleurs par basculement.

21. Document de sécurité ou semi-fini selon la revendication 20, cependant que l'élément de sécurité (2) est appliqué sur une des deux surfaces et enjambe un trou (3) ou une zone du document ou du semi-fini à travers laquelle on peut voir.

22. Document de sécurité ou semi-fini selon la revendication 20, cependant que l'élément de sécurité (4) est inséré au moins partiellement dans le document et enjambe un trou ou une zone du document ou du semi-fini à travers laquelle on peut voir.

23. Document de sécurité ou semi-fini selon la revendication 20, cependant que l'élément de sécurité (4) est inséré de telle façon dans le document ou dans le semi-fini que, dans de premières zones, il est visuellement reconnaissable à la première surface, et que, dans de deuxièmes zones différentes des premières zones, il est visuellement reconnaissable à la deuxième surface.

24. Élément de sécurité (2, 4) selon une des revendications de 1 à 19, comportant un matériau de transfert destiné au placement de l'élément de sécurité (2, 4) sur un document de valeur, **caractérisé en ce que** le matériau de transfert comprend la structure en couches suivante :
- une couche support,
- le substrat (S),
- et, de chaque côté du substrat (S), respectivement une des couches réfléchissantes (R1, R2) et respectivement un des éléments d'interférence (I1, I2) à effet de changement des couleurs par basculement.

25. Procédé de fabrication d'un document de valeur ayant un élément de sécurité (2, 4) selon une des revendications de 1 à 19, **caractérisé en ce que**, sur le document de valeur, en certaines zones, l'élément de sécurité (2, 4) est transposé avec du matériau de transfert selon la revendication 24, et qu'ensuite, le cas échéant, la couche support est retirée.
